# EUROPÄISCHE PATENTSCHRIFT

(11) **EP 2 985 607 B1**
(45) Veröffentlichungstag und Bekanntmachung des Hinweises auf die Patenterteilung: **27.12.2017**
(21) Anmeldenummer: 15180707.0
(22) Anmeldetag: 12.08.2015
(51) Int. Cl.: G01P 5/24, G01F 1/66

(54) **ANEMOMETER UND VERFAHREN ZUR BESTIMMUNG EINER STRÖMUNGSGESCHWINDIGKEIT**
ANEMOMETER AND METHOD FOR DETERMINING A FLOW RATE
ANEMOMETRE ET PROCEDE DE DETERMINATION D'UNE VITESSE DE FLUX

(30) Priorität: 14.08.2014 DE 102014216157
(43) Veröffentlichungstag der Anmeldung: 17.02.2016
(73) Patentinhaber: Fraunhofer Gesellschaft zur Förderung der angewandten Forschung e.V., 80686 München (DE)
(72) Erfinder: Viöl, Wolfgang, 37139 Adelebsen (DE); Siebert, Dominik, 37079 Göttingen (DE)
(74) Vertreter: Friese Goeden Patentanwälte PartGmbB

(56) Entgegenhaltungen:
- EP-A1- 0 125 061
- DE-A1- 19 548 882
- DE-A1- 19 617 961
- DE-A1- 19 727 960
- DE-A1-102013 100 670
- US-A- 2 699 677
- US-A- 4 031 756
- US-B1- 7 628 081

## Beschreibung

Die Erfindung betrifft ein Anemometer mit zumindest einer Ultraschallquelle und zumindest einem Ultraschallempfänger. Weiterhin betrifft die Erfindung ein Verfahren zur Bestimmung einer Strömungsgeschwindigkeit oder eines Strömungsvektors eines Gasstroms, bei welchem die Laufzeit von zumindest einem Schallsignal auf einer von einer Ultraschallquelle und einem Ultraschallempfänger begrenzten Messstrecke bestimmt wird. Vorrichtungen und Verfahren der eingangs genannten Art können dazu verwendet werden, die Windrichtung, die Windgeschwindigkeit und die Temperatur zu bestimmen.

Aus der Praxis sind Ultraschallanemometer bekannt, welche zumindest zwei Piezokeramiken enthalten, welche sowohl als Sender als auch als Empfänger für Ultraschallwellen dienen. Die Piezokristalle sind an zwei gegenüberstehenden Armen montiert und begrenzen eine Messstrecke. Die Laufzeit des Ultraschallsignals über die Messstrecke hängt von der Strömungsgeschwindigkeit und der Temperatur des Gases in der Messstrecke ab. Durch Bestimmen der Laufzeit der Schallsignale in beide Richtungen kann der Einfluss der Temperatur bestimmt werden, sodass die Windgeschwindigkeit und die Temperatur getrennt voneinander bestimmbar sind. Durch mehrere Messstrecken, welche in etwa orthogonal zueinander angeordnet sind, kann ein Strömungsvektor in zwei oder drei Dimensionen bestimmt werden.

Der Nachteil dieser bekannten Anemometer besteht darin, dass die Laufzeitmessung für jede zu messende Dimension in zwei Richtungen durchgeführt werden muss. Die dreidimensionale Bestimmung eines Strömungsvektors erfordert somit mindestens sechs Messungen. Somit sind der Zeitbedarf und der Energiebedarf für die Bestimmung des Strömungsvektors ebenfalls um einen Faktor 6 vergrößert.

Die US 2 699 677 A offenbart eine Vorrichtung zur Bestimmung der Windgeschwindigkeit, bei welcher eine einzelne Funkenstrecke als Schallquelle verwendet wird. Die Elektroden der Funkenstrecke sind jedoch nicht mit einem Isolator beschichtet, sodass sich keine dielektrisch behinderte Entladung ausbilden kann.

Ebenso zeigt die EP 0 125 061 A1 ein Verfahren und eine Vorrichtung zur Bestimmung der Strömungsgeschwindigkeit und der Temperatur in einem Rohr, bei welchem die Laufzeit eines akustischen Signals gemessen wird, welches mittels einer Funkenentladung erzeugt wird

Die US 7 628 081 beschreibt ebenfalls eine Vorrichtung, bei welcher eine Funkenentladung zur Erzeugung eines akustischen Signals verwendet wird, um die Geschwindigkeit einer Rohrströmung zu ermitteln.

Die DE 197 27 960 A1 zeigt eine Vorrichtung zur Bestimmung eines Abgas-Volumenstroms in einem Abgasrohr, wobei eine unter einem Winkel α zum Rohrverlauf angeordnete Messstrecke in beiden Richtungen von einem Schallsignal durchlaufen wird, welches durch eine Plasmaentladung erzeugt wird.

Die DE 195 48 882 A1 offenbart eine Funkenentladung als Schallquelle.

Ausgehend vom Stand der Technik liegt der Erfindung somit die Aufgabe zugrunde, ein Verfahren und eine Vorrichtung zur Bestimmung einer Strömungsgeschwindigkeit anzugeben, welches eine verbesserte zeitliche Auflösung aufweist und mit geringem Energieeinsatz durchführbar ist.

Die Aufgabe wird erfindungsgemäß durch ein Anemometer gemäß Anspruch 1 und ein Verfahren gemäß Anspruch 9 gelöst. Vorteilhafte Weiterbildungen der Erfindung finden sich in den Unteransprüchen.

Erfindungsgemäß wird ein Anemometer vorgeschlagen, welches zumindest eine Ultraschallquelle und zumindest einen Ultraschallempfänger aufweist. Ultraschallquelle und Ultraschallempfänger sind beabstandet zueinander angeordnet. Das von der Ultraschallquelle ausgesandte Schallsignal kann gepulst oder moduliert werden, sodass die Laufzeit des Schallsignales von der Ultraschallquelle zum Ultraschallempfänger bestimmt werden kann. Hierzu wird in an sich bekannter Weise bei Aussendung des Ultraschallsignals von der Ultraschallquelle ein elektrisches Startsignal erzeugt. Der Ultraschallempfänger erzeugt bei Eintreffen des Schallsignales ein elektrisches Stoppsignal, sodass die verstrichene Zeitdauer mit an sich bekannter Elektronik bestimmt werden kann.

Erfindungsgemäß wird nun vorgeschlagen, dass die Ultraschallquelle zumindest eine Plasmaerzeugungseinrichtung enthält. Für die Zwecke der vorliegenden Erfindung wird unter einem Plasma ein teilweise ionisiertes Gas verstanden. Das Plasma enthält somit Elektronen, Ionen und Neutralteilchen. Deren jeweilige Dichten und Temperaturen können durch die Art der Plasmaerzeugung bzw. durch den Typ der Plasmaerzeugungseinrichtung in weiten Grenzen beeinflusst werden.

Die erfindungsgemäß eingesetzte Plasmaerzeugungseinrichtung kann die Zusammensetzung des Plasmas zeitlich variieren. Beispielsweise kann das Plasma als kurzer Puls erzeugt werden. Ein kontinuierlich betriebenes Plasma kann moduliert werden, d.h. die Plasmadichte und/oder die Temperatur verändern sich in Abhängigkeit eines elektrischen Eingangssignales mit der Zeit. Da sich das Gasvolumen des Plasmas bei Erwärmung ausdehnt, gibt ein solchermaßen moduliertes Plasma eine ebenso modulierte Schallwelle ab. Gegenüber an sich bekannten Ultraschallquellen weist die erfindungsgemäß vorgeschlagene Plasmaquelle den Vorteil auf, dass das Plasma nahezu masselos ist und daher die Schallwelle dem elektrischen Eingangssignal nahezu verzögerungsfrei folgt. Weiterhin treten im Plasma, anders als bei Festkörpermembranen bekannter Lautsprecher bzw. Ultraschallquellen, keine Partialschwingungen auf, welche zu Verzerrungen des von bekannten Ultraschallquellen abgegebenen Schallsignals führen. Daher wird das zur Modulation verwendete elektrische Signal mit nur geringen Fehlern in ein akustisches Signal gewandelt. Daher ist die Frequenz in weiten Grenzen durchstimmbar, sodass sich nahezu beliebige Kurvenformen erzeugen lassen.

Die erfindungsgemäß verwendete Ultraschallquelle kann in unterschiedlichen Betriebszuständen eingesetzt werden: In einigen Ausführungsformen der Erfindung können Oberschwingungen des Ultraschallsignals zur Laufzeitmessung verwendet werden. In wiederum anderen Ausführungsformen der Erfindung können die Ultraschallsignale Rechtecksignale sein. In wiederum anderen Ausführungsformen der Erfindung kann die Ultraschallquelle Dämpfungsimpulse erzeugen. Aufgrund der Flexibilität bei der Erzeugung besonderer Pulsformen und/oder Frequenzen des anregenden Ultraschallsignals kann das vorgeschlagene Anemometer mit höherer Genauigkeit messen und/oder einen breiteren Geschwindigkeitsbereich abdecken als bisher bekannte Anemometer mit Piezokristallen oder Piezokeramiken als Ultraschallquelle.

Da ein in etwa kugelförmiges oder ringförmiges oder zylinderförmiges Plasma Schallwellen in alle Winkelbereiche einer Ebene mit konstanter Intensität aussendet, kann die Messung in einer Mehrzahl von Raumrichtungen gleichzeitig erfolgen, sodass die Messzeit verringert sein kann.

In einigen Ausführungsformen der Erfindung kann die Plasmaerzeugungseinrichtung zumindest eine Elektrode und zumindest eine Einrichtung zur Erzeugung einer modulierbaren elektrischen Spannung enthalten. In anderen Ausführungsformen der Erfindung kann die Plasmaerzeugungseinrichtung zumindest zwei Elektrode und zumindest eine Einrichtung zur Erzeugung einer modulierbaren elektrischen Spannung enthalten. Zwei Elektroden sind üblicherweise durch einen Spalt beabstandet zueinander angeordnet, sodass sich bei Überschreiten der Durchbruchfeldstärke das Plasma in diesem Spalt ausbildet. Sofern nur eine Elektrode verwendet wird, kann die Gegenelektrode durch das umgebende Luftvolumen und/oder das Gehäuse oder einen Teil des Gehäuses des Anemometers gebildet werden. Sofern die das Plasma anregende Spannung bzw. der das Plasma antreibende Strom amplitudenmoduliert ist, werden auch die Dichte und/oder die Temperatur des Plasmas moduliert, sodass sich durch die sich ausbildende Plasmaflamme ein entsprechend moduliertes Schallsignal erzeugen lässt.

In einigen Ausführungsformen der Erfindung können die zumindest zwei Elektroden so geformt sein, dass das Plasma eine im Vergleich zur Gesamtlänge der Messstrecke eine geringe Ausdehnung im Raum aufweist und rotationssymmetrisch ist, sodass das Plasma annähernd als Punktschallquelle angesehen werden kann. Eine geringe Ausdehnung kann in einigen Ausführungsformen der Erfindung bedeuten, dass das Verhältnis der Ausdehnung des Plasmas zur Länge der Messstrecke kleiner ist als etwa 0,01 oder kleiner als etwa 0,001 oder kleiner als etwa 0,0001.

In einigen Ausführungsformen der Erfindung kann das Anemometer zumindest einen Ultraschallempfänger enthalten, welcher ein Piezomikrofon enthält. Die Piezomikrofone enthalten zumindest einen Kristall oder zumindest eine Keramik, dessen elektrische Polarisation sich bei elastischer Verformung verändert. Eine solche Verformung tritt beispielsweise auf, wenn die von der Ultraschallquelle erzeugte Schallwelle auf den piezoelektrischen Festkörper des Piezomikrofons trifft. Somit kann das akustische Signal in ein elektrisches Signal gewandelt werden, welches nachfolgend verstärkt werden kann und einer Auswerteschaltung zugeführt werden kann.

In einigen Ausführungsformen der Erfindung kann das Piezomikrofon ein planares Piezomikrofon sein. In anderen Ausführungsformen der Erfindung kann das Piezomikrofon ein radiales Piezomikrofon sein. Dabei weist ein planares Piezomikrofon eine größere Empfindlichkeit auf, wohingegen ein radiales Piezomikrofon einen größeren Akzeptanzbereich besitzt. In Abhängigkeit der Größe und der mechanischen Eigenschaften der verwendeten Piezokeramiken kann das Maximum der Empfindlichkeit der Piezomikrofone in einen Frequenzbereich gelegt werden, welcher von der Ultraschallquelle bevorzugt abgestrahlt wird. Hierdurch wird die Empfindlichkeit des Anemometers gesteigert. In einigen Ausführungsformen der Erfindung können die Piezomikrofone so ausgewählt sein, dass die von der Ultraschallquelle ausgesandten Signale besonders verzerrungsarm empfangen werden können, so dass die Genauigkeit der Messung erhöht sein kann.

In einigen Ausführungsformen der Erfindung enthält das Anemometer zumindest einen Temperatursensor. Der Temperatursensor kann ausgewählt sein aus einem Messwiderstand, beispielsweise einem Platin-Widerstand, einem Silizium-Widerstand, einem Keramik-Kaltleiter oder einem Metalloxid-Widerstand. In anderen Ausführungsformen der Erfindung kann der Temperatursensor einen Schwingquarz als Messelement enthalten, dessen Resonanzfrequenz sich abhängig von der Temperatur verändert. In wiederum anderen Ausführungsformen der Erfindung kann der Temperatursensor ein Thermoelement oder ein Pyrometer oder einen faseroptischen Temperatursensor enthalten oder daraus bestehen. Durch die unabhängige Messung der Temperatur kann der Temperatureinfluss auf die Signallaufzeit kompensiert werden, sodass sich eine höhere Genauigkeit bei der Bestimmung des Geschwindigkeitsvektors ergibt.

In einigen Ausführungsformen der Erfindung können die Plasmaerzeugungseinrichtung und damit die Ultraschallquelle in etwa im Zentrum des Anemometers angeordnet sein, wobei zumindest drei oder zumindest vier Ultraschallempfänger auf einem Teilkreis um das Zentrum herum angeordnet sind. Eine solche Anordnung erlaubt die Bestimmung von zwei Komponenten des Geschwindigkeitsvektors in der durch die Ultraschallempfänger und die Ultraschallquelle definierten Ebene in nur einer Messung, sodass der Geschwindigkeitsvektor rasch bestimmt werden kann. Hierdurch kann die Messfrequenz erhöht werden kann oder der Energieverbrauch der Messung reduziert sein kann.

In einigen Ausführungsformen der Erfindung kann sich die Plasmaquelle auf einer gedachten Geraden durch den Mittelpunkt des Teilkreises befinden, welche senkrecht zu der durch den Teilkreis aufgespannten Ebene verläuft. In diesem Fall kann die elektromagnetische Verträglichkeit erhöht sein, da elektromagnetsiche Störungen der Plamaquelle nicht unmittelbar auf die Ultraschallempfänger einwirken können.

Die Plasmaerzeugungseinrichtung ist dazu eingerichtet, eine dielektrisch behinderte Entladung zu erzeugen. Die Entladung kann an die jeweiligen Erfordernisse des Anemometers angepasst werden, um entweder die Messgenauigkeit oder die Messgeschwindigkeit oder den Energieverbrauch des Anemometers zu optimieren. Zur Erzeugung einer dielektrisch behinderte Entladung kann zumindest eine leitfähige Elektrode mit einem Isolator versehen sein und/oder ein Isolator im Entladungsspalt angeordnet sein.

In einigen Ausführungsformen der Erfindung kann das Schallsignal mit einer Frequenz von etwa 40 kHz bis etwa 200 kHz gepulst werden. Dieser Frequenzbereich zeichnet sich durch ein günstiges Signal-/Rauschverhältnis aus und erlaubt somit eine hohe Messfrequenz und eine hohe Messgenauigkeit.

In einigen Ausführungsformen der Erfindung kann das Schallsignal gepulst abgegeben werden. Hierzu kann das Plasma ebenfalls gepulst erzeugt werden, sodass der Energieverbrauch des Anemometers verringert ist.

Nachfolgend soll die Erfindung anhand von Figuren ohne Beschränkung des allgemeinen Erfindungsgedankens näher erläutert werden. Dabei zeigt
- Figur 1: eine Querschnitt durch ein erfindungsgemäßes Anemometer.
- Figur 2: zeigt einen Schnitt durch die Grundrissebene des erfindungsgemäßen Anemometers.
- Figur 3: zeigt eine axonometrische Darstellung des erfindungsgemäßen Anemometers.
- Figur 4: zeigt die prinzipielle Funktionsweise des erfindungsgemäßen Anemometers.

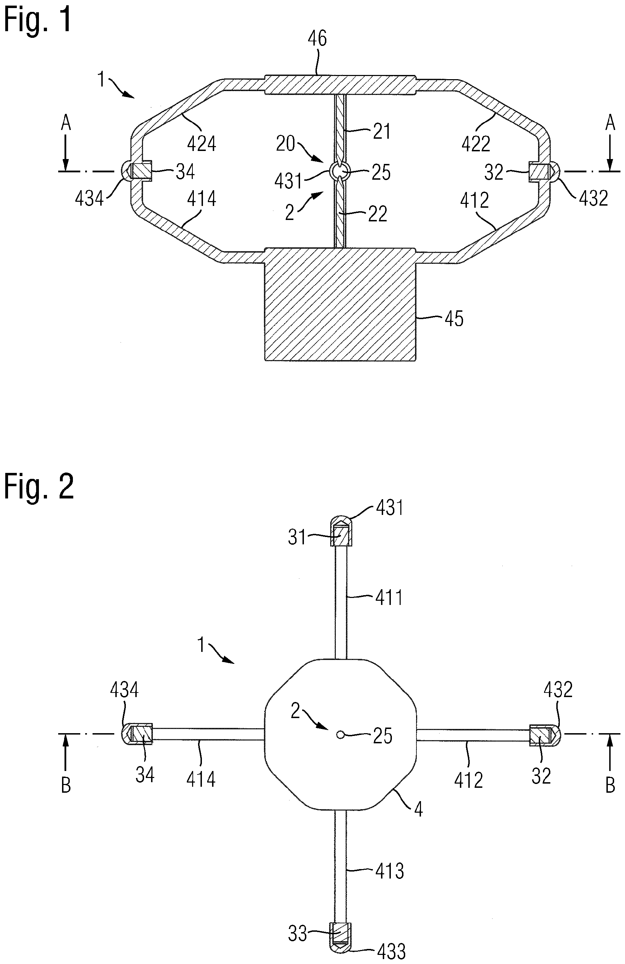

Anhand der Figuren 1 bis 3 wird eine erste Ausführungsform eines erfindungsgemäßen Anemometers erläutert. Dabei zeigt Figur 2 einen Schnitt durch die Grundrissebene, welcher in Figur 1 als Schnittlinie A-A dargestellt ist. Figur 1 zeigt dementsprechend einen Schnitt durch die Aufrissebene, welcher in Figur 2 als Schnittlinie B-B markiert ist.

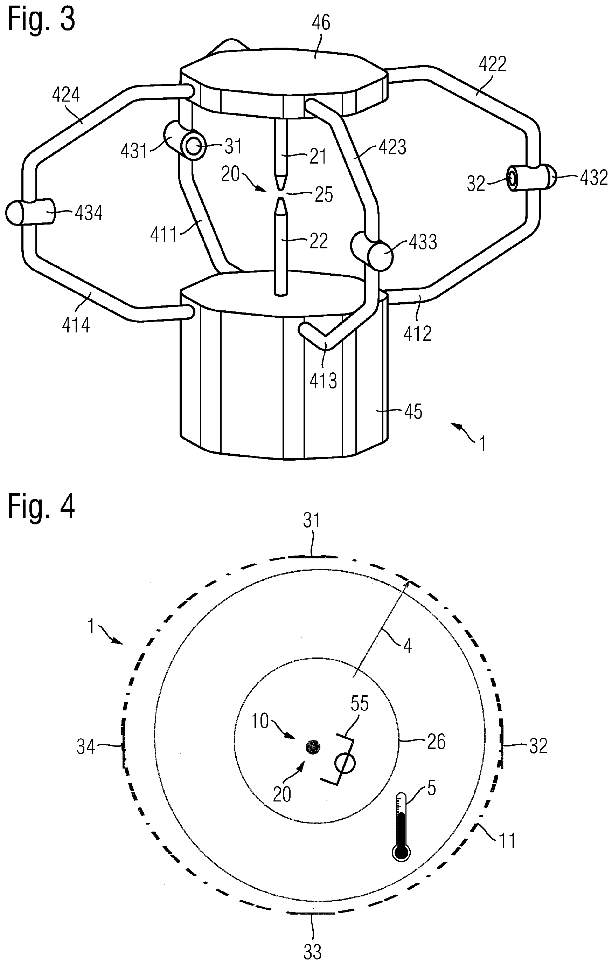

Figur 3 zeigt eine axonometrische, d. h. eine Pseudo-3D-Darstellung des erfindungsgemäßen Anemometers. Es ist darauf hinzuweisen, dass der mechanische Aufbau des Anemometers gemäß der Figuren 1 bis 3 lediglich erläuternd anzusehen ist und andere Ausführungsformen der Erfindung ein anderes Erscheinungsbild aufweisen können.

Das erfindungsgemäße Anemometer enthält eine Ultraschallquelle 2, welche in etwa im Zentrum des Anemometers angeordnet ist. Die Ultraschallquelle 2 enthält zumindest eine Plasmaerzeugungseinrichtung 20. Die Plasmaerzeugungseinrichtung 20 enthält zumindest zwei Elektroden 21 und 22. Beide Elektroden sind elektrisch isoliert und über einen Entladungsspalt 25 voneinander beabstandet. Die dem Entladungsspalt 25 zugeordneten Enden der Elektroden 21 und 22 können einen gegenüber dem Schaft der Elektroden verringerten Querschnitt aufweisen, um durch die an der Spitze auftretende Feldüberhöhung die Ausbildung einer Plasmaentladung im Entladungsspalt 25 zu erleichtern bzw. die Durchbruchfeldstärke zu verringern oder die räumliche Ausdehnung des Plasmas zu verringern. In anderen Ausführungsformen der Erfindung kann nur eine Elektrode vorhanden sein, an welcher beispielsweise eine Koronaentladung ausbildbar ist oder welche gegen einen Teil des Gehäuses als Gegenelektrode arbeitet.

Der Abstand der Elektroden bzw. der Entladungsspalt kann in einigen Ausführungsformen der Erfindung kleiner als 5 mm, kleiner als 2 mm, kleiner als 1 mm oder kleiner als 0,5 mm sein. Ein kleinerer Entladungsspalt bewirkt dabei den Betrieb mit geringeren Versorgungsspannungen. Weiterhin kann die Ultraschallquelle 2 dann idealisiert als Punktschallquelle betrachtet werden, von welcher in etwa kugelförmige oder zylinderförmige Schallwellen nahezu isotrop in der Messebene ausgesendet werden.

Im dargestellten Ausführungsbeispiel weist das Anemometer vier Ultraschallempfänger 31, 32, 33 und 34 auf. Die Ultraschallempfänger befinden sich auf zwei orthogonalen Achsen und sind etwa gleich weit von der Ultraschallquelle 2 entfernt. Hierdurch kann in jeder durch die beiden Achsen definierten Raumrichtung eine zweifache Messung der Laufzeit von der Ultraschallquelle 2 zu den Ultraschallempfängern durchgeführt werden. In anderen Ausführungsformen der Erfindung kann die Anzahl der Ultraschallempfänger größer oder geringer sein. Zumindest ist ein Ultraschallempfänger vorhanden, um eine Messstrecke zwischen einer Ultraschallquelle 2 und einem Ultraschallempfänger 31 auszubilden. Zur Bestimmung des Geschwindigkeitsvektors in der durch die Ultraschallempfänger und die Ultraschallquelle aufgespannten Ebene sind zumindest drei Ultraschallempfänger erforderlich, um beide Komponenten des Geschwindigkeitsvektors zu erfassen. In anderen Ausführungsformen der Erfindung kann die Anzahl der Ultraschallempfänger auch größer sein, so können beispielsweise 5 bis 20 oder 8 bis 16 Ultraschallempfänger vorhanden sein, um die Laufzeit redundant zu messen und die Richtung und den Betrag des Geschwindigkeitsvektors der Gasströmung mit größerer Genauigkeit zu bestimmen.

In einigen Ausführungsformen der Erfindung enthalten die Ultraschallempfänger 31, 32, 33 und 34 jeweils ein planares Piezoelement, welches bei Auftreffen der von der Ultraschallquelle 2 ausgehenden Schallwelle verformt wird und diese Verformung in ein elektrisches Signal wandelt. Das elektrische Signal wird über zugeordnete Anschlusskabel an eine Auswerteelektronik weitergeleitet, welche beispielsweise zumindest einen Verstärker und/oder Filterstufen und/oder A/D-Wandler und/oder Zeitdiskriminatoren und/oder Time-to-Digital-Konverter enthalten kann. Teile der Auswerteelektronik können in einer Software realisiert sein, welche die gewünschte Funktion ausführt, wenn diese Software auf einem Mikroprozessor oder einem Microcontroller läuft.

Der mechanische Aufbau des Anemometers 1 umfasst einen Fuß 45, mit welchem das Anemometer beispielsweise auf einem Mast montierbar ist. Die Ultraschallempfänger 31, 32, 33 und 34 befinden sich in Montagetaschen 431, 432, 433 und 434, welche die Ultraschallempfänger witterungsgeschützt aufnehmen. Die Montagetaschen können darüber hinaus einen in Richtung der Schalleintrittsfläche ausgebildeten Rand oder eine akustische Linse aufweisen, um das Eindringen von Störgeräuschen zu erschweren und hierdurch das Signal-/Rauschverhältnis zu verbessern. Die Ultraschallempfänger können in den Montagetaschen durch Vergussmasse vor eintretender Feuchtigkeit geschützt sein.

Die Montagetaschen 431, 432 und 433 sind über untere Montagebügel 411, 412, 413 und 414 mit einem Fuß 45 verbunden. Weiterhin tragen die Montagetaschen 431, 432, 433 und 434 obere Montagebügel 421, 422, 423 und 424. Am Kreuzungspunkt der oberen Montagebügel ist eine Deckelplatte 46 befestigt, welche beispielsweise kreisförmig oder polygonal geformt sein kann.

Die Deckelplatte 46 trägt in ihrem Mittelpunkt die obere Elektrode 21. Die untere Elektrode 22 ist am Fuß 45 befestigt, sodass sich der Entladungsspalt 25 im Mittelpunkt des Anemometers ausbildet und in der durch die Ultraschallempfänger 31, 32, 33 und 34 definierten Ebene.

Die oberen Montagebügel 421, 422, 423 und 424, die unteren Montagebügel 411, 412, 413 und 414, die Montagetaschen 431, 432, 433 und 434, der Fuß 45 und die Deckelplatte 46 können aus einem Metall, einer Legierung oder einem Kunststoff gefertigt sein, beispielsweise im Spritzguß- oder Druckgußverfahren.

Wie Figur 1 weiter zeigt, befinden sich die Plasmaerzeugungseinrichtung 20 und die Ultraschallempfänger 31, 32, 33 und 34 in etwa in einer Ebene.

Die Funktionsweise des Anemometers wird nochmals anhand der Figur 4 erläutert. Im Zentrum 10 des Anemometers 1 befindet sich die Plasmaerzeugungseinrichtung 20 der Ultraschallquelle 2. Die Plasmaerzeugungseinrichtung 20 wird von einer Hochspannungsquelle 55 mit elektrischer Energie versorgt. Beispielsweise kann die Hochspannungsquelle 55 einzelne elektrische Pulse an die Elektroden 21 und 22 abgeben, sodass sich eine gepulste Entladung im Entladungsspalt 25 ausbildet, wobei jede Entladung eine spektral breitbandige Schallwelle erzeugt, welche sich konzentrisch um den Entladungsspalt ausbreitet. In anderen Ausführungsformen der Erfindung kann die Einrichtung 55 zur Erzeugung einer elektrischen Spannung eine Plasmaentladung im Entladungsspalt erzeugen, welche kontinuierlich brennt. In diesem Fall kann durch Amplitudenmodulation eine modulierte Ultraschallwelle erzeugt werden, welche dem elektrischen Modulationssignal mit großer Genauigkeit und geringen Verzerrungen folgt, da die zur Schallerzeugung verwendete Plasmaentladung anders als übliche zur Schallerzeugung verwendete Membranen eine sehr geringe Masse aufweist und keine Partialschwingungen besitzt.

Wie Figur 4 zeigt, breitet sich die Wellenfront 26 konzentrisch um das Zentrum 10 des Anemometers aus. Die im Ausführungsbeispiel vier Ultraschallempfänger 31, 32, 33 und 34 liegen auf einem Teilkreis 11, welcher sich konzentrisch um das Zentrum 10 erstreckt.

Sofern sich das Anemometer 1 in einer ruhenden Gasatmosphäre befindet, erreicht die Wellenfront 26 sämtliche Ultraschallempfänger 31, 32, 33 und 34 zur selben Zeit. Wird die Wellenfront 26 durch den Strömungsvektor 4 des Gasstromes verzerrt, so verkürzt sich die Laufzeit zu den in Stromluv gelegenen Ultraschallempfängern. In Figur 4 sind dies die Ultraschallempfänger 31 und 32. Die Laufzeit des akustischen Signals 26 zu den in Stromlee gelegenen Empfängern verlängert sich. In Figur 4 sind dies die Ultraschallempfänger 33 und 34. Durch Auswertung dieser Laufzeitdifferenzen und Konvertierung in Polarkoordinaten kann der Strömungsvektor 4 in Betrag und Richtung bestimmt werden.

Da die Schallgeschwindigkeit auch von der Temperatur des Gasstromes abhängt, kann ein unabhängiger Temperatursensor 5 vorgesehen sein, welcher die Temperatur des Gasstromes bestimmt, sodass die gemessenen Laufzeitunterschiede auf die Temperaturen normiert werden können. Hierdurch wirken sich Temperaturänderungen des Gasstromes nicht auf den gemessenen Strömungsvektor 4 aus.

Die Pulsform des Schallsignals 26 kann durch Anpassen des elektrischen Ansteuersignals aus der Einrichtung 55 zur Erzeugung der Hochspannung variiert werden, um auf diese Weise die Messgenauigkeit, die Messgeschwindigkeit oder den Energieverbrauch des Anemometers zu optimieren. In einigen Ausführungsformen der Erfindung können für unterschiedliche Messprogramme unterschiedliche Pulsformen des Schallsignals 26 verwendet werden.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Anemometer (1) mit zumindest einer Ultraschallquelle (2) und zumindest einem Ultraschallempfänger (31, 32, 33, 34), wobei die Ultraschallquelle (2) zumindest eine Plasmaerzeugungseinrichtung (20) enthält, **dadurch gekennzeichnet, dass**
die Plasmaerzeugungseinrichtung (20) dazu eingerichtet ist, eine dielektrisch behinderte Entladung zu erzeugen, und dass das Plasma verwendet wird, um Ultraschallsignale durch Ansteuerung von Elektroden mittels Pulsen von einer Hochspannungsquelle oder durch Ansteuerung von Elektroden mittels einer modulierten elektrischen Spannung zu erzeugen.

2. Anemometer nach Anspruch 1, **dadurch gekennzeichnet, dass** die Plasmaerzeugungseinrichtung (20) zumindest eine Elektrode (21, 22) und zumindest eine Einrichtung (55) zur Erzeugung der modulierbaren elektrischen Spannung enthält.

3. Anemometer nach Anspruch 1 oder 2, **dadurch gekennzeichnet, dass** zumindest ein Ultraschallempfänger (31, 32, 33, 34) ein Piezomikrofon enthält oder
dass zumindest ein Ultraschallempfänger (31, 32, 33, 34) ein planares Piezomikrofon enthält.

4. Anemometer nach einem der Ansprüche 1 bis 3, weiterhin enthaltend zumindest einen Temperatursensor (5).

5. Anemometer nach Anspruch 4, **dadurch gekennzeichnet, dass** der Temperatursensor (5) ausgewählt ist aus einem Messwiderstand und/oder einem Schwingquarz und/oder einem Thermoelement und/oder faseroptischen Sensor.

6. Anemometer nach einem der Ansprüche 1 bis 5, **dadurch gekennzeichnet, dass** die Plasmaerzeugungseinrichtung (20) etwa im Zentrum (10) des Anemometers (1) angeordnet ist, wobei zumindest drei Ultraschallempfänger (31, 32, 33, 34) auf einem Teilkreis (11) um das Zentrum (10) herum angeordnet sind

7. Anemometer nach Anspruch 6, **dadurch gekennzeichnet, dass** die Plasmaerzeugungseinrichtung und die Ultraschallempfänger (31, 32, 33, 34) in einer Ebene angeordnet sind.

8. Anemometer nach einem der Ansprüche 1 bis 7, **dadurch gekennzeichnet**, dassdie Ultraschallempfänger (31, 32, 33, 34) in zugeordneten Montagetaschen (431, 432, 433, 434) angeordnet sind, welche einen in Richtung der Schalleintrittsfläche ausgebildeten Rand und/oder eine akustische Linse aufweisen.

9. Verfahren zur Bestimmung einer Strömungsgeschwindigkeit oder eines Strömungsvektors (4) eines Gasstroms, bei welchem die Laufzeit von zumindest einem Schallsignal (26) auf einer von einem Ultraschallquelle (2) und einem Ultraschallempfänger (31, 32, 33, 34) begrenzten Messstrecke bestimmt wird, wobei das Schallsignal durch zumindest ein moduliertes Plasma (25) erzeugt wird, **dadurch gekennzeichnet, dass** das Plasma mit einer dielektrisch behinderten Entladung erzeugt wird und dass das Plasma verwendet wird, um Ultraschallsignale durch Ansteuerung von Elektroden mittels Pulsen von einer Hochspannungsquelle oder durch Ansteuerung von Elektroden mittels einer modulierten elektrischen Spannung zu erzeugen.

10. Verfahren nach Anspruch 9, **dadurch gekennzeichnet, dass** das Schallsignal (26) gepulst abgegeben wird oder
dass das Schallsignal (26) mit einer Frequenz von etwa 40 kHz bis etwa 200 kHz gepulst wird oder
dass das Schallsignal (26) amplitudenmoduliert wird
und/oder
dass das Plasma eine Punktschallquelle bildet.

11. Verfahren nach einem der Ansprüche 9 bis 10, **dadurch gekennzeichnet, dass** mit zumindest einem Temperatursensor (5) eine Temperatur des Gasstromes bestimmt wird.

12. Verfahren nach einem der Ansprüche 9 bis 11, **dadurch gekennzeichnet, dass** das Schallsignal (26) durch das zumindest eine modulierte Plasma in mehrere in einer Ebene liegende Richtungen ausgestrahlt wird und in zumindest drei oder zumindest vier Raumrichtungen nachgewiesen wird.

13. Verfahren nach einem der Ansprüche 9 bis 12, **dadurch gekennzeichnet, dass** zumindest drei oder zumindest vier Ultraschallempfänger (31, 32, 33, 34) auf einem Teilkreis (11) mit einem Zentrum angeordnet sind und die Ultraschallquelle (2) etwa im Zentrum (10) des Teilkreis (11) angeordnet ist.

14. Verfahren nach einem der Ansprüche 9 bis 13, **dadurch gekennzeichnet, dass** die Pulsform des durch durch das modulierte Plasma (25) erzeugten Schallsignals durch Anpassen des elektrischen Ansteuersignals einer Einrichtung (55) zur Erzeugung einer Hochspannung variiert wird.

## Claims

1. Anemometer (1) comprising at least one ultrasound source (2) and at least one ultrasonic receiver (31, 32, 33, 34), wherein the ultrasound source (2) contains at least one plasma generation device (20),
**characterized in that**
the plasma generation device (20) is configured to produce a dielectric barrier discharge and that the plasma is used to produce ultrasonic signals by controlling electrodes by means of pulses from a high voltage source or by controlling electrodes by means of a modulated electrical voltage.

2. Anemometer according to claim 1, **characterized in that** the plasma generation device (20) contains at least one electrode (21, 22) and at least one device (55) for producing the electrical voltage which can be modulated.

3. Anemometer according to claim 1 or 2, **characterized in that** at least one ultrasonic receiver (31, 32, 33, 34) contains a piezo microphone or that at least one ultrasonic receiver (31, 32, 33, 34) contains a planar piezo microphone.

4. Anemometer according to any of claims 1 to 3, further comprising at least one temperature sensor (5).

5. Anemometer according to claim 4, **characterized in that** the temperature sensor (5) is selected from a measuring resistor and/or an oscillating quartz and/or a thermocouple and/or a fiber-optic sensor.

6. Anemometer according to any of claims 1 to 5, **characterized in that** the plasma generation device (20) is arranged approximately in the center (10) of the anemometer (1), wherein at least three ultrasonic receivers (31, 32, 33, 34) are arranged on a pitch circle (11) around the center (10).

7. Anemometer according to claim 6, **characterized in that** the plasma generation device and the ultrasonic receivers (31, 32, 33, 34) are arranged in a plane.

8. Anemometer according to any of claims 1 to 7, **characterized in that** the ultrasonic receivers (31, 32, 33, 34) are arranged in assigned installation pockets (431, 432, 433, 434), which have an edge developed in the direction of the sound entry area and/or an acoustic lens.

9. Method for determining a flow rate or a flow vector (4) of a gas flow, in which the duration of at least one sound signal (26) is determined on a measuring section limited by an ultrasound source (2) and an ultrasonic receiver (31, 32, 33, 34), wherein the sound signal is produced by at least one modulated plasma (25), **characterized in that** the plasma is produced by means of a dielectric barrier discharge and that the plasma is used to produce ultrasonic signals by controlling electrodes by means of pulses from a high voltage source or by controlling electrodes by means of a modulated electrical voltage.

10. Method according to claim 9, **characterized in that** the sound signal (26) is emitted in pulsed fashion or that the sound signal (26) is pulsed with a frequency of approximately 40 kHz to approximately 200 kHz or that the sound signal (26) is amplitude-modulated and/or that the plasma forms a point sound source.

11. Method according to any of claims 9 to 10, **characterized in that** a temperature of the gas flow is determined by at least one temperature sensor (5).

12. Method according to any of claims 9 to 11, **characterized in that** the sound signal (26) is emitted by the at least one modulated plasma into several directions which lie in a plane and is detected in at least three or at least four spatial directions.

13. Method according to any of claims 9 to 12, **characterized in that** at least three or at least four ultrasonic receivers (31, 32, 33, 34) are arranged on a pitch circle (11) having a center and the ultrasound source (2) is arranged approximately in the center (10) of the pitch circle (11).

14. Method according to any of claims 9 to 13, **characterized in that** the pulse shape of the sound signal produced by the modulated plasma (25) is varied by adjusting the electric control signal of a device (55) for producing a high voltage.

## Revendications

1. Anémomètre (1) comportant au moins une source d'ultrasons (2) et au moins un récepteur d'ultrasons (31, 32, 33, 34), dans lequel la source d'ultrasons (2) comprend au moins un dispositif générateur de plasma (20),
**caractérisé en ce que**
le dispositif générateur de plasma (20) est conçu pour générer une décharge à barrière diélectrique,
et **en ce que** le plasma est utilisé pour générer des signaux ultrasonores par pilotage d'électrodes au moyen d'impulsions depuis une source haute tension ou par pilotage d'électrodes au moyen d'une tension électrique modulée.

2. Anémomètre selon la revendication 1, **caractérisé en ce que** le dispositif générateur de plasma (20) comprend au moins une électrode (21, 22) et au moins un dispositif (55) pour générer la tension électrique modulable.

3. Anémomètre selon la revendication 1 ou 2, **caractérisé en ce qu'**au moins un récepteur d'ultrasons (31, 32, 33, 34) comprend un microphone piézoélectrique ou **en ce qu'**au moins un récepteur d'ultrasons (31, 32, 33, 34) comprend un microphone piézoélectrique planaire.

4. Anémomètre selon l'une des revendications 1 à 3, comportant en outre au moins un capteur de température (5).

5. Anémomètre selon la revendication 4, **caractérisé en ce que** le capteur de température (5) est choisi parmi une résistance de mesure et/ou un quartz oscillant et/ou un thermocouple et/ou un capteur à fibre optique.

6. Anémomètre selon l'une des revendications 1 à 5, **caractérisé en ce que** le dispositif générateur de plasma (20) est agencé approximativement au centre (10) de l'anémomètre (1), et au moins trois récepteurs d'ultrasons (31, 32, 33, 34) sont agencés sur un cercle partiel (11) autour du centre (10).

7. Anémomètre selon la revendication 6, **caractérisé en ce que** le dispositif générateur de plasma et le récepteur d'ultrasons (31, 32, 33, 34) sont agencés dans un plan.

8. Anémomètre selon l'une des revendications 1 à 7, **caractérisé en ce que** les récepteurs d'ultrasons (31, 32, 33, 34) sont agencés dans des poches de montage associées (431, 432, 433, 434) qui présentent un bord réalisé en direction de la surface d'entrée de son et/ou une lentille acoustique.

9. Procédé pour déterminer la vitesse d'écoulement ou un vecteur d'écoulement (4) d'un flux de gaz, dans lequel on détermine la durée de propagation d'au moins un signal sonore (26) sur un trajet de mesure limité par la source d'ultrasons (2) et par un récepteur d'ultrasons (31, 32, 33, 34), et on génère le signal sonore par au moins un plasma modulé (25), **caractérisé en ce que** l'on génère le plasma avec une décharge à barrière diélectrique et on utilise le plasma pour générer des signaux ultrasonores par pilotage d'électrodes au moyen d'impulsions depuis une source haute tension ou par pilotage d'électrodes au moyen d'une tension électrique modulée.

10. Procédé selon la revendication 9, **caractérisé en ce que** le signal sonore (26) est émis de façon pulsée ou **en ce que** le signal sonore (26) est pulsé à une fréquence d'environ 40 kHz à environ 200 kHz ou **en ce que** le signal sonore (26) est modulé en amplitude et/ou **en ce que** le plasma constitue une source sonore ponctuelle.

11. Procédé selon l'une des revendications 9 à 10, **caractérisé en ce que** l'on détermine une température du flux de gaz par au moins un capteur de température (5).

12. Procédé selon l'une des revendications 9 à 11, **caractérisé en ce que** l'on émet le signal sonore (26) par ledit au moins un plasma modulé en plusieurs directions situées dans un plan et on le met en évidence dans au moins trois ou dans au moins quatre directions dans l'espace.

13. Procédé selon l'une des revendications 9 à 12, **caractérisé en ce que** au moins trois ou au moins quatre récepteurs d'ultrasons (31, 32, 33, 34) sont agencés sur un cercle partiel (11) ayant un centre, et la source d'ultrasons (2) est agencée approximativement au centre (10) du cercle partiel (11).

14. Procédé selon l'une des revendications 9 à 13, **caractérisé en ce que** l'on varie la forme d'impulsion du signal sonore généré par le plasma modulé (25) par adaptation du signal de pilotage électrique d'un dispositif (55) destiné à générer une haute tension.
